# EUROPEAN PATENT SPECIFICATION

(11) **EP 4 606 211 B1**
(45) Date of publication and mention of the grant of the patent: **11.03.2026**
(21) Application number: 24159570.1
(22) Date of filing: 26.02.2024
(51) Int. Cl.: A01G 3/025, B25G 1/04

(54) **TELESCOPIC HAND TOOL, IN PARTICULAR A TELESCOPIC PRUNER**
TELESKOPISCHES HANDWERKZEUG, INSBESONDERE TELESKOPPFLAUMMASCHINE
OUTIL À MAIN TÉLESCOPIQUE, EN PARTICULIER SÉCATEUR TÉLESCOPIQUE

(43) Date of publication of application: 27.08.2025
(73) Proprietor: Husqvarna AB, 561 82 Huskvarna (SE)
(72) Inventor: Rudolf, Peter, 89250 Senden (DE)
(74) Representative: Finkele, Rolf

(56) References cited:
- EP-B1- 2 022 320
- CN-U- 206 341 625
- CN-U- 210 746 173
- CN-U- 216 492 145
- GB-A- 2 605 369
- JP-A- 2000 334 181
- US-B1- 10 328 568

## Description

The present invention relates to a telescopic hand tool. In particular, the present invention relates to a telescopic pruner. Telescopic hand tools with two tubes and an integrated pull cord or pull band are well known. In many telescopic hand tools, the pull cords are visible and guided in grooves formed along the entire length of the tube. Telescopic hand tools with three tubes have usually pull cords running outside of the tube. Three tubes allow a small minimum length and a large maximum length of the telescopic hand tool. CN210746173, CN206341625, EP2022320B1 and GB2605369A disclose different examples of telescopic hand tools having multiple tubes, a tool head, a back handle, pulling means and a number of pulleys.

It is an object of the present invention to provide a telescopic hand tool with at least three tubes, wherein the pulling means, particularly the pull cord or the pull band, is arranged substantially inside the telescopic hand tool, and wherein a length of the pulling means is automatically adaptable to a length of the telescopic hand tool, such that said telescopic hand tool is easy to operate by the user.

The object of the present invention is achieved by a telescopic hand tool according to claim **1.**

The present invention provides a telescopic hand tool, in particular a telescopic pruner, the telescopic hand tool comprises:
- an outer tube,
- at least one intermediate tube slidable within the outer tube,
- an inner tube slidable within the intermediate tube,
- at least one tool head connected or connectable to the front end of the inner tube,
- a back handle detachably arranged at the back end of the outer tube,
- a pulling means, particularly having a flat cross-section, wherein the pulling means is arranged substantially inside the tubes, wherein one end of the pulling means is connected to the back handle, while another end of the pulling means is connected to a fixing point at the front end of the outer tube,
- a number of deflection pulleys arranged at the back ends of the tubes and at the front ends of the outer tube and intermediate tube, wherein the deflection pulleys are provided for redirecting the pulling means,
- a hoist pulley slidable within the inner tube and connected to the tool head, wherein the hoist pulley is provided for redirecting the pulling means,
- a first portion of the pulling means extending between the back handle and a first deflection pulley arranged at the front end of the outer tube,
- a second portion of the pulling means extending between the first deflection pulley and a second deflection pulley arranged at or close to the back end of the outer tube,
- a pull sleeve slidable along the outer tube and connected to the first portion of the pulling means, and
- a groove formed in the outer side of the outer tube and extending parallel to said outer tube, wherein
- the first portion and the second portion of the pulling means are arranged to one another within the groove.

The pulling mean according to the present invention may particularly be a pull band or a pull cord. Preferably, the pulling means may be formed as a flat pull band having a flat and/or rectangular cross-sectional shape. Alternatively, the pulling means may be formed as a circular cord.

The arrangement of the pulling means and the connection of the pull sleeve to the first portion of the pulling means are configured such that a length of the pulling means is compensable when the inner tube, the intermediate tube and the outer tube are slid relative to each other. Thereby, an easy to operate telescopic hand tool having two telescopic interfaces, is providable.

The arrangement of the first portion and the second portion of the, particularly flat, pulling means to one another within the groove on the one hand and the arrangement of the deflection pulleys at the front ends and the back ends of the tubes on the other hand allow that the pulling means is arranged substantially inside the telescopic hand tool and that the length of the pulling means is substantially automatically adapted to the length of the telescopic hand tool. The first and second portions of the pulling means are moved into opposite directions within the groove. Further, the deflection pulley at the end of the inner tube and/or the intermediate tube and/or the deflection pulley at the outside of the intermediate tube provide a decreased, particularly minimized, force during a length adjustment of the telescopic hand tool, particularly lopper.

Preferably, a guiding pulley is arranged at or close to the back end of the outer tube and keeps the first portion of the pulling means at a defined distance from the second portion of said pulling means, so that friction between the first and second portions of the pulling means is avoidable. Furthermore, the guide pulley together with the corresponding deflection pulley provide a decreased, particularly minimized distance between the portions of the pulling means. Thereby, the diameter of the respective tube may be decreased, particularly minimized.

According to an embodiment of the invention, the first portion of the pulling means extends substantially parallel to the outer tube, wherein a first deflection pulley redirects the pulling means by 180 degrees, wherein the second portion of the pulling means extends substantially parallel to the outer tube and/or the first portion of the pulling means, and wherein a second deflection pulley redirects the pulling means by 180 degrees, and wherein a third portion of the pulling means extends from the second deflection pulley to the hoist pulley. Thereby, the telescopic hand tool is telescopable at two different interfaces, while the pull belt at all times has the same tension. Hence, preferably the telescopic hand tool is easy to use by the user.

According to an exemplary embodiment, the first deflection pulley and/or the second deflection pulley may comprise a needle bearing or may have a large ratio between an axle diameter and a pulley diameter. Thereby, a friction loss may be decreased and the operating force applied by the user may be decreased.

Further, an end sleeve may be arranged at the back end of the outer tube, wherein the second deflection pulley and/or the guiding pulley are arranged inside said end sleeve, and wherein preferably the back handle is detachably mounted at the end sleeve. Thereby, the tool head may be operable either by moving the pull sleeve or the back handle.

In particular, a stop cam is attached at the outer side of the outer tube, wherein the pull sleeve is slidable between said stop cam and the end sleeve. Thereby, an axial movement of the pull sleeve is limited.

Preferably, the telescopic hand tool comprises at least two telescopic interfaces, wherein a first telescopic interface connects the outer tube and the intermediate tube, while a second telescopic interface connects the intermediate tube and the inner tube. This combines a short storage length with a large operating length of the telescopic hand tool.

Providing the telescopic hand tool with the two telescopic interfaces according to the present invention may provide the advantage that the tube guidance between two tubes is free of relative movement to each other respectively backlash. Further, providing the two telescopic interfaces may inhibit that the material of the two tubes rub directly on each other. Hence, advantageously, fretting may be inhibited. Additionally, the first telescopic interface and/or the second telescopic interface comprise(s) the deflection for the length adaption during telescopic as well as an end stop such that the two tubes may not be entirely separated from each other. Arranging the deflection pulley and the guiding pulley in the telescopic interface may provide the advantage that a pulling means distance may be optimized, and hence a size of the telescopic interface may be minimized. Further, the deflection of the pulling means according to the invention may provide the advantage that a pull sleeve for cutting may be used.

Moreover, the first deflection pulley may be arranged at the outer side of the outer tube and preferably inside the first telescopic interface. Thereby, a length of the pull belt is automatically adaptable to a length of the telescopic hand tool.

Additionally, a plastic tube may enclose partially the outer tube and covers a part of the groove, wherein preferably the plastic tube extends between the first telescopic interface and the stop cam. The plastic tube minimises the visible portion of the pulling means. Hence, an electric isolation of the telescopic hand tool may be providable and at the same time the first portion of the pull belt and the second portion of the pull belt are securely held within the groove.

For example, the hoist pulley is connected to the tool head by at least one rod, cord, or further band.

Further, a first portion of the pulling means may be connected to the pull sleeve by a fixation, in particular by at least one clamping connection. Hence, an elongation of the pull belt after some time of use may be easily compensable.

Preferably, the deflection pulleys and/or the hoist pulley are provided for redirecting the pulling means by about 180 degrees.

A further guiding pulley is dedicated to at least one deflection pulley, so that the pulling means takes an S-shaped course between the further guiding pulley and the corresponding deflection pulley. Hence, the pull belt is securely held on the deflection pulley.

According to the preferred embodiment of the present invention, the maximum length of the telescopic hand tool is between 3 m and 5 m, in particular about 4 m, while a minimum length of the telescopic hand tool is between 1.5 m and 2.0 m, in particular about 1.7 m. This combines a short storage length with a large operating length of the telescopic hand tool.

In particular, the groove has a rectangular cross-section, wherein the cross-section corresponds with the overall cross-section of the first and second portions of the pulling means arranged to one another. Hence, a guiding of the first portion of the pull belt and the second portion of the pull belt inside of the groove is ensured.

For example, the back handle is formed as a T-shaped handle. The T-shaped handle is very easy to grip. Furthermore, the T-shaped handle has a smaller length. Thereby, the T-shaped handle allows a smaller packaging length. Additionally, the T-shaped handle is formed from less material. Thereby, the T-shaped handle comprises a decreased weight.

Furthermore, the telescopic hand tool may comprise one or more further intermediate tubes, wherein the further intermediate tube includes at least two deflection pulleys arranged at the front end and back end, respectively, of said further intermediate tube, and wherein the further intermediate tube is arranged between the outer tube and intermediate tube and/or between the intermediate tube and the inner tube. The further intermediate tubes provide an increased ratio between the maximum and minimum length of the telescopic hand tool.

Novel and inventive features of the present invention are set forth in the appended claims.

The present invention will be described in further details with reference to the accompanied drawings, in which
- Figure 1: illustrates a schematic enlarged sectional side view of a telescopic hand tool with maximum length according to a preferred embodiment of the present invention,
- Figure 2: illustrates a schematic top view of the telescopic hand tool with maximum length according to the preferred embodiment of the present invention,
- Figure 3: illustrates a schematic enlarged sectional side view of the telescopic hand tool with minimum length according to the preferred embodiment of the present invention, and
- Figure 4: illustrates a schematic top view of the telescopic hand tool with minimum length according to the preferred embodiment of the present invention.

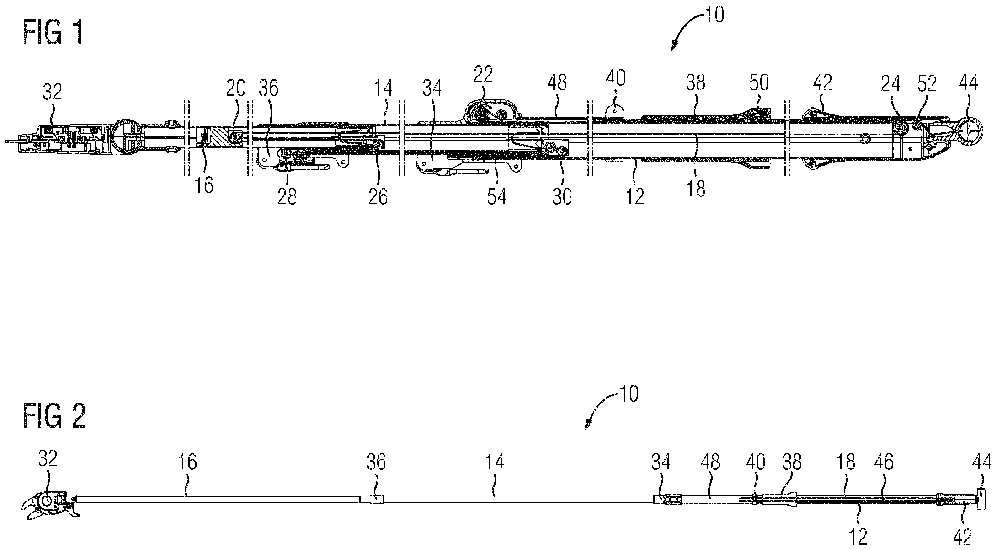

Figure 1 illustrates a schematic enlarged sectional side view of a telescopic hand tool 10 with maximum length according to the preferred embodiment of the present invention. In this example, the telescopic hand tool 10 is a telescopic pruner.

The front end of the telescopic hand tool 10 is arranged on the left-hand side in Figure 1. The back end of said telescopic hand tool 10 is arranged on the right-hand side in Figure 1. A tool head 32 is connected or connectable at the front end of the telescopic hand tool 10. A back handle 44 is detachably connected or connectable at the back end of the telescopic hand tool 10.

The telescopic hand tool 10 comprises an outer tube 12, an intermediate tube 14 and an inner tube 16. The inner tube 16 is slidable within the intermediate tube 14 along their common longitudinal axis. In turn, the intermediate tube 14 is slidable within the outer tube 12 along their common longitudinal axis.

The tool head 32 is arranged at the front end of the telescopic hand tool 10 and connected to the front end of the inner tube 16. In this example, the tool head 32 includes a pair of pruning shears. A first telescopic interface 34 is arranged at the front end of the outer tube 12. The first telescopic interface 34 connects the outer tube 12 and the intermediate tube 14. A second telescopic interface 36 is arranged at the front end of the intermediate tube 14. The second telescopic interface 36 connects the intermediate tube 14 and the inner tube 16.

A pull sleeve 38 encloses the outer tube 12. The pull sleeve 38 is slidable along the outer tube 12. A stop cam 40 is attached at the outer side of the outer tube 12 in order to limit the sliding section of the pull sleeve 38. An end sleeve 42 encloses the back end of the outer tube 12. The pull sleeve 38 is slidable between the stop cam 40 and the end sleeve 42 along the outer tube 12. The back handle 44 is detachably mounted at the end sleeve 42.

A hoist pulley 20 is arranged inside the inner tube 12. The hoist pulley 20 is slidable along the longitudinal axis of the inner tube 12. The hoist pulley 20 is connected to at least one tool of the tool head 32 by a rod, a cord, or another band, so that the tool head 32 is operated by sliding the hoist pulley 20 inside the inner tube 12.

A pulling means 18 is arranged substantially inside the telescopic hand tool 10, wherein a part of the pulling means 18 is arranged in an elongated groove 46 formed as a recess in the outside of the outer tube 12. The groove 46 has a rectangular cross-section and extends parallel to the longitudinal axis of the outer tube 12. The one end of the pulling means 18 is connected to the back handle 44. The other end of the pulling means 18 is connected to a fixing point 54 at the front end of the outer tube 12. The pulling means 18 is a pull band and has a flat cross-section.

In this embodiment, the telescopic hand tool 10 comprises five deflection pulleys 22, 24, 26, 28 and 30. A first deflection pulley 22 is arranged at the front end and outer side of the outer tube 12. In this example, the first deflection pulley 22 is arranged within the first telescopic interface 34. A second deflection pulley 24 is arranged at the back end of the outer tube 12 and inside the end sleeve 42. A third deflection pulley 26 is arranged at the back end of the inner tube 16. A fourth deflection pulley 28 is arranged at the front end of the intermediate tube 14. A fifth deflection pulley 30 is arranged at the back end of the intermediate tube 14.

A first portion of the pulling means 18 extends from the back handle 44 to the first deflection pulley 22. The first portion of the pulling means 18 extends substantially within the groove 46 at the outside of the outer tube 12. The first portion of the pulling means 18 is connected to the pull sleeve 38 by a fixation 50, so that the pulling means 18 is moveable by sliding the pull sleeve 38. The pulling means 18 is redirected by the first deflection pulley 22.

A second portion of the pulling means 18 extends from the first deflection pulley 22 to the second deflection pulley 24. The first and second portions of the pulling means 18 are guided within the groove 46 at the outside of the outer tube 12. The first and second portions of the pulling means 18 extend parallel to the longitudinal axis of the outer tube 12. The first and second portions of the pulling means 18 are arranged to one another within the groove 46, wherein the first portion of the pulling means 18 covers the second portion of said pulling means 18. Only the first portion of the pulling means 18 is visible. A plastic tube 48 extends between the first telescopic interface 34 and the stop cam 40 and encloses the outer tube 12. The plastic tube 48 covers the pulling means 18 between the telescopic interface 20 and the stop cam 40. The pulling means 18 is redirected by the second deflection pulley 24.

A guiding pulley 52 is arranged inside the end sleeve 42. The guiding pulley 52 is provided for guiding the first portion of the pulling means 18, so that the first and second portions of the pulling means 18 are spaced from each other and a friction between the first and second portions of the pulling means 18 is avoided.

A third portion of the pulling means 18 extends from the second deflection pulley 24 to the hoist pulley 20 and extends inside the outer tube 12, the intermediate tube 14 and the inner tube 16 along the longitudinal axis of said tubes 12, 14 and 16. The hoist pulley 20 is slidable along the inner tube 12. The pulling means 18 is redirected again by the hoist pulley 20.

A fourth portion of the pulling means 18 extends from the hoist pulley 20 to the third deflection pulley 26 and extends inside the inner tube 16 and the intermediate tube 14. The third deflection pulley 26 is arranged at the back end of the inner tube 16 and redirects again the pulling means 18 from the hoist pulley 20.

A fifth portion of the pulling means 18 extends from the third deflection pulley 26 to the fourth deflection pulley 28 and extends inside the intermediate tube 14. The fourth deflection pulley 28 is arranged at the front end of the intermediate tube 14. The fourth deflection pulley 28 redirects again the pulling means 18 from the third deflection pulley 26.

A sixth portion of the pulling means 18 extends from the fourth deflection pulley 28 to the fifth deflection pulley 30. The sixth portion of the pulling means 18 extends along the inner side of the intermediate tube 14. The fifth deflection pulley 30 is arranged at the back end of the intermediate tube 14. The fifth deflection pulley 30 redirects again the pulling means 18 from the fourth deflection pulley 28. An end portion of the pulling means 18 is fixed at the fixing point 54 at the outer tube 12 in the area of the first telescopic interface 34.

The tool head 32 can be operated by pulling the back handle 44 or by shifting respectively sliding the pull sleeve 38. On the one hand, the first portion of the pulling means 18 is connected to the pull sleeve 38 by the fixation 50. On the other hand, the first portion of the pulling means 18 is connected to the back handle 44.

Figure 2 illustrates a schematic top view of the telescopic hand tool 10 with maximum length according to the preferred embodiment of the present invention. In this example, the maximum length of the telescopic hand tool 10 is about 4 m.

The plastic tube 48 extends between the first telescopic interface 34 and the stop cam 40 and encloses the outer tube 12. The plastic tube 48 covers the groove 46 with the first and second portions of the pulling means 18 between the first telescopic interface 34 and the stop cam 40. The pulling means 18 is only visible between the stop cam 40 and the end sleeve 42. The pulling means 18 is mostly invisible and therefore protected from sunlight, dirt, and mechanical damages.

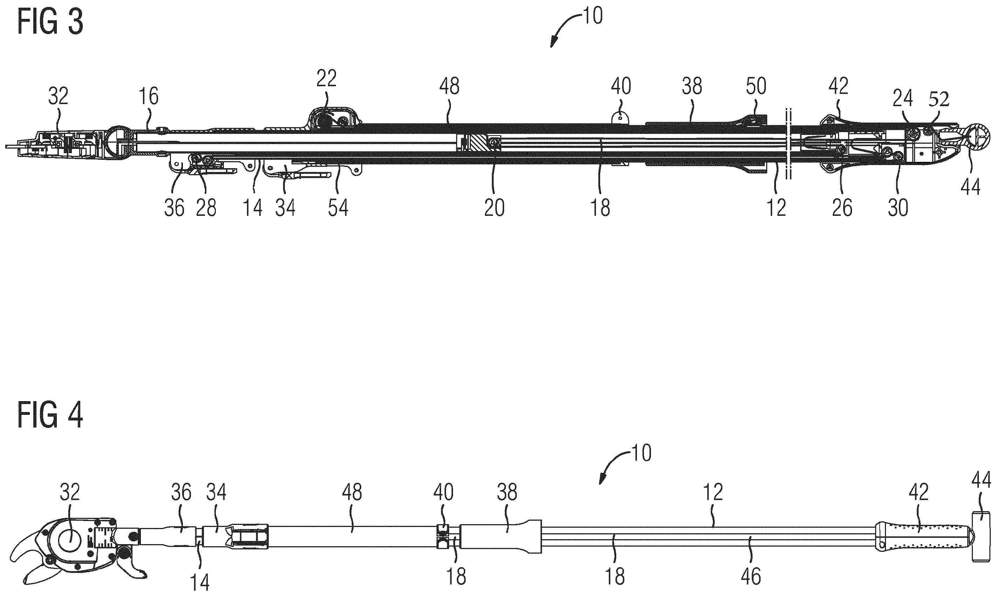

Figure 3 illustrates a schematic enlarged sectional side view of the telescopic hand tool 10 with minimum length according to the preferred embodiment of the present invention.

In the telescopic hand tool 10 with minimum length the tubes 12, 14 and 16 are pushed substantially into one another. The first telescopic interface 34 and the second telescopic interface 36 are arranged directly in series. The second telescopic interface 36 is arranged directly behind the tool head 32. The hoist pulley 20 is arranged substantially halfway inside the telescopic hand tool 10. The third deflection pulley 26 and the fifth deflection pulley 30 are arranged within the end sleeve 42. The fourth deflection pulley 28 is arranged close to the tool head 32. The deflection pulleys 26, 28 and 30 compensate the length of the pulling means 18, so that the pulling means 18 is always in a stretched state independent of the length of the telescopic hand tool 10.

Figure 4 illustrates a schematic top view of the telescopic hand tool 10 with minimum length according to the preferred embodiment of the present invention. In this example, the minimum length of the telescopic hand tool 10 is about 1.7 m.

At minimum length, the first telescopic interface 34, the second telescopic interface 36 and the tool head 32 are directly arranged in series. The pulling means 18 is only visible between the stop cam 40 and the end sleeve 42. The invisible pulling means 18 is covered by the plastic tube 48 or arranged inside the tubes 12, 14 and 16. The invisible pulling means 18 is protected from sunlight, dirt, and mechanical damages.

Preferably, the tubes 12, 14 and 16 are made of metal, in particular aluminium.

The arrangement of the first and second portions of the flat pulling means 18 to one another within the groove 46 on the one hand and the arrangement of the deflection pulleys 22, 24, 26, 28, 30 at the front ends and back ends of the tubes 12, 14, 16 on the other hand allow that the pulling means 18 is arranged substantially inside the telescopic hand tool 10. At the same time, a length of the pulling means 18 may be compensable substantially automatically when the user adapts the length of the telescopic hand tool. Only the first portion of the pulling means 18 is partially visible. The first and second portions of the pulling means 18 are moved into opposite directions within the groove 46.

The embodiments of the telescopic hand tool 10 described above include three tubes 12, 14 and 16. In general, the telescopic hand tool 10 may include one or more intermediate tubes 14. The further intermediate tubes comprise two deflection pulleys in each case. One deflection pulley is arranged at the front end and the other one is arranged at the back end of the further intermediate tube.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### Reference Numerals

- 10: telescopic hand tool
- 12: outer tube
- 14: intermediate tube
- 16: inner tube
- 18: pulling means
- 20: hoist pulley
- 22: first deflection pulley
- 24: second deflection pulley
- 26: third deflection pulley
- 28: fourth deflection pulley
- 30: fifth deflection pulley
- 32: tool head
- 34: first telescopic interface
- 36: second telescopic interface
- 38: pull sleeve
- 40: stop cam
- 42: end sleeve
- 44: back handle
- 46: groove
- 48: plastic tube
- 50: fixation
- 52: guiding pulley
- 54: fixing point

## Claims

1. Telescopic hand tool (10), in particular a telescopic pruner, the telescopic hand tool (10) comprises:
- an outer tube (12),
- at least one intermediate tube (14) slidable within the outer tube (12),
- an inner tube (16) slidable within the intermediate tube (14),
- at least one tool head (32) connected or connectable to a front end of the inner tube (16),
- a back handle (44) detachably arranged at a back end of the outer tube (12),
- a pulling means (18), particularly having a flat cross-section, wherein the pulling means (18) is arranged substantially inside the outer tube (12), the intermediate tube (14), and the inner tube (16), wherein one end of the pulling means (18) is connected to the back handle (44), while another end of the pulling means (18) is connected to a fixing point (54) at a front end of the outer tube (12),
- a number of deflection pulleys (22, 24, 26, 28, 30) arranged at the back end of the outer tube (12), a back end of the intermediate tube (14), and a back end of the inner tube (16) and at the front end of the outer tube (12) and a front end of the intermediate tube (14), wherein the deflection pulleys (22, 24, 26, 28, 30) are provided for redirecting the pulling means (18),
- a hoist pulley (20) slidable within the inner tube (16) and connected to the tool head (32), wherein the hoist pulley (20) is provided for redirecting the pulling means (18),
- a first portion of the pulling means (18) extending between the back handle (44) and a first deflection pulley (22) arranged at the front end of the outer tube (12),
- a second portion of the pulling means (18) extending between the first deflection pulley (22) and a second deflection pulley (24) arranged at or close to the back end of the outer tube (12),
- a pull sleeve (38) slidable along the outer tube (12) and connected to the first portion of the pulling means (18), and
- an elongated groove (46) formed in the outer side of the outer tube (12) and extending parallel to said outer tube (12), wherein
- the first portion and the second portion of the pulling means (18) are arranged and guided above one another within the groove (46).

2. Telescopic hand tool (10) according to claim 1, **characterised in that**
the first portion of the pulling means (18) extends substantially parallel to the outer tube (12),
wherein a first deflection pulley (22) redirects the pulling means (18) by 180 degrees,
wherein the second portion of the pulling means (18) extends substantially parallel to the outer tube (12) and/or the first portion of the pulling means (18), and
wherein a second deflection pulley (24) redirects the pulling means by 180 degrees,
wherein a third portion of the pulling means (18) extends from the second deflection pulley (24) to the hoist pulley (20).

3. Telescopic hand tool (1) according to claim 1 or claim 2, a guiding pulley (52) is arranged at or close to the back end of the outer tube (12) and keeps the first portion of the pulling means (18) at distance from the second portion of said pulling means (18), so that friction between the first portion and second portion of the pulling means (18) is substantially avoidable.

4. Telescopic hand tool (10) according to any one of the preceding claims,
**characterised in that**
an end sleeve (42) is arranged at the back end of the outer tube (12), wherein the second deflection pulley (24) and/or the guiding pulley (52) are arranged inside said end sleeve (42), and wherein preferably the back handle (44) is detachably mounted at the end sleeve (42).

5. Telescopic hand tool (10) according to claim 4,
**characterised in that**
a stop cam (40) is attached at the outer side of the outer tube (12), wherein the pull sleeve (38) is slidable between said stop cam (40) and the end sleeve (42).

6. Telescopic hand tool (10) according to any one of the preceding claims,
**characterised in that**
the telescopic hand tool (10) comprises at least two telescopic interfaces (34, 36), wherein a first telescopic interface (34) connects the outer tube (12) and the intermediate tube (14), while a second telescopic interface (36) connects the intermediate tube (14) and the inner tube (16).

7. Telescopic hand tool (10) according to any one of the preceding claims,
**characterised in that**
the first deflection pulley (22) is arranged at the outer side of the outer tube (12) and preferably inside the first telescopic interface (34).

8. Telescopic hand tool (10) according to any one of the preceding claims,
**characterised in that**
a plastic tube (48) encloses partially the outer tube (12) and covers a part of the groove (46), wherein preferably the plastic tube (48) extends between the first telescopic interface (34) and the stop cam (40).

9. Telescopic hand tool (10) according to any one of the preceding claims,
**characterised in that**
the hoist pulley (20) is connected to the tool head (32) by at least one rod, cord, or further band.

10. Telescopic hand tool (10) according to any one of the preceding claims,
**characterised in that**
a first portion of the pulling means (18) is connected to the pull sleeve (38) by a fixation (50), in particular by at least one clamping connection.

11. Telescopic hand tool (10) according to any one of the preceding claims,
**characterised in that**
the deflection pulleys (22, 24, 26, 28, 30) and/or the hoist pulley (20) are provided for redirecting the pulling means (18) by about 180 degrees.

12. Telescopic hand tool (10) according to any one of the preceding claims,
**characterised in that**
a further guiding pulley is dedicated to at least one deflection pulley (22, 24, 26, 28, 30), so that the pulling means (18) takes an S-shaped course between the further guiding pulley and the corresponding deflection pulley (22, 24, 26, 28, 30).

13. Telescopic hand tool (10) according to any one of the preceding claims,
**characterised in that**
a maximum length of the telescopic hand tool (10) is between 3 m and 5 m, in particular about 4 m, while a minimum length of the telescopic hand tool (10) is between 1.5 m and 2.0 m, in particular about 1.7 m.

14. Telescopic hand tool (10) according to any one of the preceding claims,
**characterised in that**
the groove (46) has a rectangular cross-section, wherein the cross-section corresponds with the overall cross-section of the first and second portions of the pulling means (18) arranged to one another.

15. Telescopic hand tool (10) according to any one of the preceding claims,
**characterised in that**
the telescopic hand tool (10) comprises at least one further intermediate tube, wherein the further intermediate tube includes at least two deflection pulleys arranged at the front end and back end, respectively, of said further intermediate tube, and wherein the further intermediate tube is arranged between the outer tube (12) and intermediate tube (14) and/or between the intermediate tube (14) and the inner tube (16).

## Patentansprüche

1. Teleskopisches Handwerkzeug (10), insbesondere eine teleskopische Astschere, wobei das teleskopische Handwerkzeug (10) umfasst:
- ein Außenrohr (12),
- mindestens ein Zwischenrohr (14), das in dem Außenrohr (12) verschiebbar ist,
- ein Innenrohr (16), das in dem Zwischenrohr (14) verschiebbar ist,
- mindestens einen Werkzeugkopf (32), der mit einem vorderen Ende des Innenrohrs (16) verbunden oder verbindbar ist,
- einen hinteren Griff (44), der lösbar an einem hinteren Ende des Außenrohrs (12) angeordnet ist,
- ein Zugmittel (18), das insbesondere einen flachen Querschnitt aufweist, wobei das Zugmittel (18) im Wesentlichen innerhalb des Außenrohrs (12), des Zwischenrohrs (14) und des Innenrohrs (16) angeordnet ist, wobei ein Ende des Zugmittels (18) mit dem hinteren Griff (44) verbunden ist, während ein anderes Ende des Zugmittels (18) mit einem Befestigungspunkt (54) an einem vorderen Ende des Außenrohrs (12) verbunden ist,
- eine Anzahl von Umlenkrollen (22, 24, 26, 28, 30), die am hinteren Ende des Außenrohrs (12), einem hinteren Ende des Zwischenrohrs (14) und einem hinteren Ende des Innenrohrs (16) und am vorderen Ende des Außenrohrs (12) und einem vorderen Ende des Zwischenrohrs (14) bereitgestellt sind, wobei die Umlenkrollen (22, 24, 26, 28, 30) zum Umlenken des Zugmittels (18) bereitgestellt sind,
- eine Hubrolle (20), die in dem Innenrohr (16) verschiebbar und mit dem Werkzeugkopf (32) verbunden ist, wobei die Hubrolle (20) zum Umlenken des Zugmittels (18) bereitgestellt ist,
- einen ersten Abschnitt des Zugmittels (18), der sich zwischen dem hinteren Griff (44) und einer ersten Umlenkrolle (22) erstreckt, die am vorderen Ende des Außenrohrs (12) angeordnet ist,
- einen zweiten Abschnitt des Zugmittels (18), der sich zwischen der ersten Umlenkrolle (22) und einer zweiten Umlenkrolle (24) erstreckt, die am oder in der Nähe des hinteren Endes des Außenrohrs (12) angeordnet ist,
- eine Zughülse (38), die entlang des Außenrohrs (12) verschiebbar und mit dem ersten Abschnitt des Zugmittels (18) verbunden ist, und
- eine längliche Nut (46), die in der Außenseite des Außenrohrs (12) ausgebildet ist und sich parallel zu dem Außenrohr (12) erstreckt, wobei
- der erste Abschnitt und der zweite Abschnitt des Zugmittels (18) übereinander in der Nut (46) angeordnet und geführt sind.

2. Teleskopisches Handwerkzeug (10) nach Anspruch 1,
**dadurch gekennzeichnet, dass**
sich der erste Abschnitt des Zugmittels (18) im Wesentlichen parallel zu dem Außenrohr (12) erstreckt, wobei eine erste Umlenkrolle (22) das Zugmittel (18) um 180 Grad umlenkt, wobei sich der zweite Abschnitt des Zugmittels (18) im wesentlichen parallel zum Außenrohr (12) und/oder zum ersten Abschnitt des Zugmittels (18) erstreckt, und wobei eine zweite Umlenkrolle (24) das Zugmittel um 180 Grad umlenkt, wobei sich ein dritter Abschnitt des Zugmittels (18) von der zweiten Umlenkrolle (24) zur Hubrolle (20) erstreckt.

3. Teleskopisches Handwerkzeug (1) nach Anspruch 1 oder Anspruch 2, wobei eine Führungsrolle (52) am oder in der Nähe des hinteren Endes des Außenrohrs (12) angeordnet ist und den ersten Abschnitt des Zugmittels (18) auf Abstand zum zweiten Abschnitt des Zugmittels (18) hält, so dass Reibung zwischen dem ersten Abschnitt und dem zweiten Abschnitt des Zugmittels (18) im Wesentlichen vermeidbar ist.

4. Teleskopisches Handwerkzeug (10) nach einem der vorstehenden Ansprüche,
**dadurch gekennzeichnet, dass**
eine Endhülse (42) am hinteren Ende des Außenrohrs (12) angeordnet ist, wobei die zweite Umlenkrolle (24) und/oder die Führungsrolle (52) innerhalb der Endhülse (42) angeordnet sind, und wobei vorzugsweise der hintere Handgriff (44) lösbar an der Endhülse (42) angebracht ist.

5. Teleskopisches Handwerkzeug (10) nach Anspruch 4,
**dadurch gekennzeichnet, dass**
ein Anschlagnocken (40) an der Außenseite des Außenrohrs (12) angebracht ist, wobei die Zughülse (38) zwischen dem Anschlagnocken (40) und der Endhülse (42) verschiebbar ist.

6. Teleskopisches Handwerkzeug (10) nach einem der vorstehenden Ansprüche,
**dadurch gekennzeichnet, dass**
das teleskopische Handwerkzeug (10) mindestens zwei teleskopische Schnittstellen (34, 36) umfasst, wobei eine erste teleskopische Schnittstelle (34) das Außenrohr (12) und das Zwischenrohr (14) miteinander verbindet, während eine zweite teleskopische Schnittstelle (36) das Zwischenrohr (14) und das Innenrohr (16) miteinander verbindet.

7. Teleskopisches Handwerkzeug (10) nach einem der vorstehenden Ansprüche,
**dadurch gekennzeichnet, dass**
die erste Umlenkrolle (22) an der Außenseite des Außenrohrs (12) und vorzugsweise innerhalb der ersten teleskopischen Schnittstelle (34) angeordnet ist.

8. Teleskopisches Handwerkzeug (10) nach einem der vorstehenden Ansprüche,
**dadurch gekennzeichnet, dass**
ein Kunststoffrohr (48) das Außenrohr (12) teilweise umschließt und einen Teil der Nut (46) abdeckt, wobei sich das Kunststoffrohr (48) vorzugsweise zwischen der ersten teleskopischen Schnittstelle (34) und dem Anschlagnocken (40) erstreckt.

9. Teleskopisches Handwerkzeug (10) nach einem der vorstehenden Ansprüche,
**dadurch gekennzeichnet, dass**
die Hubrolle (20) durch mindestens eine Stange, ein Seil oder ein weiteres Band mit dem Werkzeugkopf (32) verbunden ist.

10. Teleskopisches Handwerkzeug (10) nach einem der vorstehenden Ansprüche,
**dadurch gekennzeichnet, dass**
ein erster Abschnitt des Zugmittels (18) mit der Zughülse (38) durch eine Fixierung (50), insbesondere durch mindestens eine Klemmverbindung, verbunden ist.

11. Teleskopisches Handwerkzeug (10) nach einem der vorstehenden Ansprüche,
**dadurch gekennzeichnet, dass**
die Umlenkrollen (22, 24, 26, 28, 30) und/oder die Hubrolle (20) zur Umlenkung des Zugmittels (18) um etwa 180 Grad bereitgestellt werden.

12. Teleskopisches Handwerkzeug (10) nach einem der vorstehenden Ansprüche,
**dadurch gekennzeichnet, dass**
eine weitere Führungsrolle mindestens einer Umlenkrolle (22, 24, 26, 28, 30) zugeordnet ist, so dass das Zugmittel (18) einen S-förmigen Verlauf zwischen der weiteren Führungsrolle und der entsprechenden Umlenkrolle (22, 24, 26, 28, 30) nimmt.

13. Teleskopisches Handwerkzeug (10) nach einem der vorstehenden Ansprüche,
**dadurch gekennzeichnet, dass**
eine maximale Länge des teleskopischen Handwerkzeugs (10) zwischen 3 m und 5 m, insbesondere etwa 4 m, beträgt, während eine minimale Länge des teleskopischen Handwerkzeugs (10) zwischen 1,5 m und 2,0 m, insbesondere etwa 1,7 m, beträgt.

14. Teleskopisches Handwerkzeug (10) nach einem der vorstehenden Ansprüche,
**dadurch gekennzeichnet, dass**
die Nut (46) einen rechteckigen Querschnitt aufweist, wobei der Querschnitt dem Gesamtquerschnitt des ersten und des zweiten Abschnitts der zueinander angeordneten Zugmittel (18) entspricht.

15. Teleskopisches Handwerkzeug (10) nach einem der vorstehenden Ansprüche,
**dadurch gekennzeichnet, dass**
das teleskopische Handwerkzeug (10) mindestens ein weiteres Zwischenrohr umfasst, wobei das weitere Zwischenrohr mindestens zwei Umlenkrollen einschließt, die am vorderen Ende bzw. am hinteren Ende des weiteren Zwischenrohrs angeordnet sind, und wobei das weitere Zwischenrohr zwischen dem Außenrohr (12) und dem Zwischenrohr (14) und/oder zwischen dem Zwischenrohr (14) und dem Innenrohr (16) angeordnet ist.

## Revendications

1. Outil à main télescopique (10), en particulier sécateur télescopique, l'outil à main télescopique (10) comprend :
- un tube externe (12),
- au moins un tube intermédiaire (14) pouvant coulisser à l'intérieur du tube externe (12),
- un tube interne (16) pouvant coulisser à l'intérieur du tube intermédiaire (14),
- au moins une tête d'outil (32) reliée ou pouvant être reliée à une extrémité avant du tube interne (16),
- une poignée arrière (44) agencée de manière amovible au niveau d'une extrémité arrière du tube externe (12),
- un moyen de traction (18), ayant en particulier une section transversale plate, dans lequel le moyen de traction (18) est agencé sensiblement à l'intérieur du tube externe (12), du tube intermédiaire (14), et du tube interne (16), dans lequel une extrémité du moyen de traction (18) est reliée à la poignée arrière (44), tandis qu'une autre extrémité du moyen de traction (18) est reliée à un point de fixation (54) au niveau d'une extrémité avant du tube externe (12),
- un nombre de poulies de renvoi (22, 24, 26, 28, 30) agencées au niveau de l'extrémité arrière du tube externe (12), d'une extrémité arrière du tube intermédiaire (14) et d'une extrémité arrière du tube interne (16) et au niveau de l'extrémité avant du tube externe (12) et d'une extrémité avant du tube intermédiaire (14), dans lequel les poulies de renvoi (22, 24, 26, 28, 30) sont prévues pour rediriger le moyen de traction (18),
- une poulie de levage (20) pouvant coulisser à l'intérieur du tube interne (16) et reliée à la tête d'outil (32), dans lequel la poulie de levage (20) est prévue pour rediriger le moyen de traction (18),
- une première partie du moyen de traction (18) s'étendant entre la poignée arrière (44) et une première poulie de renvoi (22) agencée au niveau de l'extrémité avant du tube externe (12),
- une deuxième partie du moyen de traction (18) s'étendant entre la première poulie de renvoi (22) et une seconde poulie de renvoi (24) agencée au niveau ou à proximité de l'extrémité arrière du tube externe (12),
- un manchon de traction (38) pouvant coulisser le long du tube externe (12) et relié à la première partie du moyen de traction (18), et
- une rainure allongée (46) formée dans le côté externe du tube externe (12) et s'étendant parallèlement audit tube externe (12), dans lequel
- la première partie et la deuxième partie du moyen de traction (18) sont agencées et guidées l'une au-dessus de l'autre à l'intérieur de la rainure (46).

2. Outil à main télescopique (10) selon la revendication 1,
**caractérisé en ce que**
la première partie du moyen de traction (18) s'étend sensiblement parallèlement au tube externe (12),
dans lequel une première poulie de renvoi (22) redirige le moyen de traction (18) de 180 degrés,
dans lequel la deuxième partie du moyen de traction (18) s'étend sensiblement parallèle au tube externe (12) et/ou la première partie du moyen de traction (18), et
dans lequel une seconde poulie de renvoi (24) redirige le moyen de traction de 180 degrés,
dans lequel une troisième partie du moyen de traction (18) s'étend depuis la seconde poulie de renvoi (24) jusqu'à la poulie de levage (20).

3. Outil à main télescopique (1) selon la revendication 1 ou la revendication 2, une poulie de guidage (52) est agencée au niveau ou à proximité de l'extrémité arrière du tube externe (12) et maintient la première partie du moyen de traction (18) à distance de la deuxième partie dudit moyen de traction (18), de sorte qu'une friction entre la première partie et la deuxième partie du moyen de traction (18) est sensiblement évitable.

4. Outil à main télescopique (10) selon l'une quelconque des revendications précédentes,
**caractérisé en ce que**
un manchon d'extrémité (42) est agencé au niveau de l'extrémité arrière du tube externe (12), dans lequel la seconde poulie de renvoi (24) et/ou la poulie de guidage (52) sont agencées à l'intérieur dudit manchon d'extrémité (42), et dans lequel, de préférence, la poignée arrière (44) est montée de manière amovible au niveau du manchon d'extrémité (42).

5. Outil à main télescopique (10) selon la revendication 4,
**caractérisé en ce que**
une came d'arrêt (40) est attachée au niveau du côté externe du tube externe (12), dans lequel le manchon de traction (38) peut coulisser entre ladite came d'arrêt (40) et le manchon d'extrémité (42).

6. Outil à main télescopique (10) selon l'une quelconque des revendications précédentes,
**caractérisé en ce que**
l'outil à main télescopique (10) comprend au moins deux interfaces télescopiques (34, 36), dans lequel une première interface télescopique (34) relie le tube externe (12) et le tube intermédiaire (14), tandis qu'une seconde interface télescopique (36) relie le tube intermédiaire (14) et le tube interne (16).

7. Outil à main télescopique (10) selon l'une quelconque des revendications précédentes,
**caractérisé en ce que**
la première poulie de renvoi (22) est agencée au niveau du côté externe du tube externe (12) et, de préférence, à l'intérieur de la première interface télescopique (34).

8. Outil à main télescopique (10) selon l'une quelconque des revendications précédentes,
**caractérisé en ce que**
un tube en plastique (48) entoure partiellement le tube externe (12) et recouvre une partie de la rainure (46), dans lequel, de préférence, le tube en plastique (48) s'étend entre la première interface télescopique (34) et la came d'arrêt (40).

9. Outil à main télescopique (10) selon l'une quelconque des revendications précédentes,
**caractérisé en ce que**
la poulie de levage (20) est reliée à la tête d'outil (32) par au moins une tige, une corde ou une bande supplémentaire.

10. Outil à main télescopique (10) selon l'une quelconque des revendications précédentes,
**caractérisé en ce que**
une première partie du moyen de traction (18) est reliée au manchon de traction (38) par une fixation (50), en particulier, par au moins une liaison par serrage.

11. Outil à main télescopique (10) selon l'une quelconque des revendications précédentes,
**caractérisé en ce que**
les poulies de renvoi (22, 24, 26, 28, 30) et/ou la poulie de levage (20) sont prévues pour rediriger le moyen de traction (18) d'environ 180 degrés.

12. Outil à main télescopique (10) selon l'une quelconque des revendications précédentes,
**caractérisé en ce que**
une poulie de guidage supplémentaire est dédiée à au moins une poulie de renvoi (22, 24, 26, 28, 30), de sorte que le moyen de traction (18) suit une trajectoire en forme de S entre la poulie de guidage supplémentaire et la poulie de renvoi correspondante (22, 24, 26, 28, 30).

13. Outil à main télescopique (10) selon l'une quelconque des revendications précédentes,
**caractérisé en ce que**
une longueur maximale de l'outil à main télescopique (10) est comprise entre 3 m et 5 m, en particulier environ 4 m, tandis qu'une longueur minimale de l'outil à main télescopique (10) est comprise entre 1,5 m et 2,0 m, en particulier environ 1,7 m.

14. Outil à main télescopique (10) selon l'une quelconque des revendications précédentes,
**caractérisé en ce que**
la rainure (46) a une section transversale rectangulaire, dans lequel la section transversale correspond à la section transversale globale des première et deuxième parties du moyen de traction (18) agencées l'une par rapport à l'autre.

15. Outil à main télescopique (10) selon l'une quelconque des revendications précédentes,
**caractérisé en ce que**
l'outil à main télescopique (10) comprend au moins un tube intermédiaire supplémentaire, dans lequel le tube intermédiaire supplémentaire comporte au moins deux poulies de renvoi agencées au niveau de l'extrémité avant et de l'extrémité arrière, respectivement, dudit tube intermédiaire supplémentaire, et dans lequel le tube intermédiaire supplémentaire est agencé entre le tube externe (12) et le tube intermédiaire (14) et/ou entre le tube intermédiaire (14) et le tube interne (16).
